# FASCICULE DE BREVET EUROPEEN

(11) **EP 0 325 497 B1**
(45) Date de publication et mention de la délivrance du brevet: **18.05.1994**
(21) Numéro de dépôt: 89400004.1
(22) Date de dépôt: 03.01.1989
(51) Int. Cl.: F16G 5/16

(54) **Organe de transmission pour variateur continu de vitesse, à maillons transversaux poussants et âme souple fonctionnant par frottement sec**
Treibelement für ein mittels trockener Friktion stufenlos regelbares Getriebe mit Querschubblöcken und biegsamer Seele
Transmission element for a variable transmission of the boundary friction kind, with transverse pushing blocks and a flexible carrier

(30) Priorité: 11.01.1988 FR 8800244
(43) Date de publication de la demande: 26.07.1989
(73) Titulaire: CAOUTCHOUC MANUFACTURE ET PLASTIQUES, F-78005 Versailles (FR)
(72) Inventeur: Colley, Robert, F-58300 Decize (FR); Lecouturier, Fabrice, F-58300 Decize (FR); Ledevehat, Christian, F-63000 Clermont-Ferrand (FR); Parguez, Olivier, F-63430 Pont-du-Château (FR)

(56) Documents cités:
- EP-A- 0 073 962
- DE-A- 2 557 724
- FR-A- 2 242 608
- FR-A- 2 540 953
- US-A- 4 433 965
- US-A- 4 610 648
- PATENT ABSTRACTS OF JAPAN, vol. 11, no. 221 (M-608)[2668], 17 juillet 1987,page 110 M 608; & JP-A-62 37 537 (NHK SPRING CO., LTD) 18-02-1987
- PATENT ABSTRACTS OF JAPAN, vol. 11, no. 380 (M-650)[2827], 11 décembre 1987,page 128 M 650; & JP-A-62 151 645 (HONDA MOTOR CO., LTD) 06-07-1987
- PATENT ABSTRACTS OF JAPAN, vol. 11, no. 380 (M-650)[2827], 11 décembre 1987,page 128 M 650; & JP-A-62 151 644 (HONDA MOTOR CO., LTD) 06-07-1987
- PATENT ABSTRACTS OF JAPAN, vol. 11, no. 302 (M-629)[2749], 2 octobre 1987, page47 M 629; & JP-A-62 93 536 (TOYOTA MOTOR CORP.) 30-04-1987

## Description

La présente invention concerne le domaine des transmissions à variation de vitesse continue et, plus particulièrement, à l'organe de transmission de puissance entre les poulies à gorges des variateurs, ledit organe de transmission étant constitués d'au moins une bande sans fin portant des éléments rigides transversaux appelés maillons.

De nombreux dispositifs de transmission à variation continue de vitesse ont été proposés, tels ceux décrits dans les brevets américains 4.213.350 ou français 2.242.608 et 2.437.531 de Varitrac, les brevets français 2.587.777 et 2.594.513 de Ford, 2.480.885 de Borg-Warner ou 2.414.664 de Guirriec, les brevets américains 4.338.081 de Nippondenso et 4.340.378 de Gates Rubber, ou les brevets internationaux WO 80/02060 de David et Tétard ou WO 84/04950 de Dayco, et les nombreux brevets, par exemple français 2.089.587, américains 3.720.113 et 4.080.841, ou européen 0.000802, 0.014.013, 0.014.014, 0.014.492, 0.026.534 et 0.109 132 de Van Doorne.

On peut encore citer, dans la même application, mais avec des dispositifs différents, le brevet européen 0.242.263 d'Hutchinson et les brevets français 2.527.723, 2.536.486 et 2.536.487 ou européen 0.109.556 de Michelin.

La majeure partie des inventions décrites dans les brevets précités, à l'exception de celles des brevets Hutchinson, Dayco et Michelin, utilise des âmes de courroies constituées de bandes métalliques et des maillons transversaux généralement métalliques, eux-aussi, qui impliquent une utilisation à frottement lubrifié par huile et l'emploi d'aciers spéciaux à tolérances très serrées, pour les transmissions Van Doorne, par exemple.

Les dispositifs antérieurement connus sont souvent bruyants car les maillons s'entre-choquent soit à l'entrée ou à la sortie des poulies à gorge, soit même dans les brins de la courroie entre les poulies.

De plus, il y a une usure importante de la bande sans fin et des maillons qui, après quelques heures d'utilisation, provoque une désalignement des maillons transversaux et un mauvais fonctionnement de l'ensemble. Par ailleurs, dans les systèmes à double bande, comme ceux décrits dans les brevets européens 0.014.013 et 0.109.132 de Van Doorne ou le brevet WO 84/04950 de Dayco, il est nécessaire de prévoir des dispositifs complexes pour empêcher que les bandes sans fin ne sortent des gorges des maillons.

De nombreuses formes de maillons ou cavaliers sont utilisées dans les transmissions à variation de vitesse continue, tels ceux décrits dans les brevets américains 4.338.081 de Nippondenso, et 4.080.841 de Van Doorne, dans les brevets français 2.527.723, 2.536.486 et 2.536.487 de Michelin, et, plus particulièrement, dans les brevets européens 0.000.802, 0.014.013, 0.014.492, 0.026.534 et 0.109.132 de Van Doorne. Tous ces documents décrivent des cavaliers, dont la section a un contour sensiblement trapézoïdal, comportant au moins une gorge dans laquelle s'engage l'âme constituée d'au moins une bande sans fin.

Un des problèmes les plus fréquemment rencontrés dans ce type de transmission par cavaliers réside dans le guidage de ces cavaliers à l'entrée et à la sortie des poulies à gorges.

Les problèmes les plus fréquents, dans les solutions de l'art antérieur, sont donc le maintien de la courroie dans les gorges et le guidage entre eux des maillons transversaux.

Pour éviter la dissociation de la bande sans fin et des maillons transversaux, Hutchinson propose, dans le brevet précité de solidariser les maillons transversaux avec l'armature longitudinale par l'intermédiaire d'une masse d'élastomère.

Pour résoudre les problèmes de guidage, Michelin préconise, dans les brevets antérieurement cités, de donner à la bande longitudinale et/ou aux maillons des formes particulières qui en compliquent la réalisation.
D'autres solutions de guidage sont proposées, telles que, par exemple, la réalisation, sur l'une des faces des maillons transversaux d'au moins une saillie et, sur la face opposée, d'au moins un évidement, comme décrit dans le brevet européen 0.014.492 de Van Doorne. Une telle disposition est évidemment efficace car elle permet, en effet, l'engagement d'une saillie d'un maillon transversal dans l'évidement correspondant du maillon transversal contigu, mais elle a pour inconvénient de compliquer le montage des maillons transversaux sur la bande sans fin, en nécessitant le repérage d'une face dudit maillon par rapport à l'autre.
Dans de nombreux cas, les solutions de l'art antérieur présentent différents inconvénients tels que la nécessité de disposer d'un système complexe de lubrification, comportant des filtres et des dispositifs d'épuration du lubrifiant, ou encore tels que des difficultés de fabrication dues aux tolérances serrées et à la nécessité d'utiliser des aciers spéciaux, qui entraînent des coûts de production très élevés, ou, enfin, tels que des montages complexes qui n'éliminent pas complètement les risques de dysfonctionnement.
Le document US 4 610 648 de Dayco décrit un organe de transmission selon le préambule de la revendication 1, comportant une ou deux bande(s) sans fin et des maillons transversaux, utilisable sans lubrification, les maillons étant constitués d'un polymère auto-lubrifié ou comportant des composants lubrifiants. Une telle réalisation, si elle résout le problème du frottement entre la (ou les) bande(s) sans fin et les maillons, ne prévoit aucune solution pour le guidage desdits maillons.

L'invention a pour objectif de proposer un dispositif de transmission pour variateur continu de vitesse qui permette de résoudre les problèmes des solutions antérieurement connues, en étant fiable, et capable de transmettre, sans bruit, des puissances élevées, sans nécessité de lubrification, tout en étant d'une fabrication aisée et donc économique.

L'invention est donc un organe de transmission à maillons transversaux poussants, pour variateur continu de vitesse fonctionnant par frottement sec, composé d'au moins une âme sans fin, non métallique, souple, quasiment inextensible longitudinalement, et de maillons transversaux, également non métalliques, comportant chacun au moins une gorge dans laquelle vient s'engager l'âme sans fin, et présentant un coefficient de friction entre l'âme sans fin et les maillons transversaux au plus égal à 0,4.
L'invention est caractérisée en ce que lesdits maillons transversaux, parfaitement symétriques axialement, présentent sur chacune de leurs faces un dispositif de guidage des maillons transversaux entre eux, constitué d'un élément en relief, pion de centrage ou tenon de positionnement, associé à un évidement, ne nécessitant pas le repérage du sens de montage des maillons transversaux sur l'âme sans fin.

Dans une variante préférentielle, l'âme sans fin est constituée d'au moins une courroie plate, à flancs nus, dont l'armature est constituée d'une fibre, continue ou discontinue, à haut module, telle que des fils, torons ou cables textiles, par exemple de polyamide aromatique, ou métalliques, dont une face, au moins, comporte un revêtement à faible coefficient de frottement.

Dans une autre variante, l'âme sans fin est constituée de deux câbles, de section sensiblement circulaire, quasiment inextensibles longitudinalement, réalisés dans une fibre textile ou métallique à haut module.

Les maillons transversaux, éléments constitutifs de l'organe de transmission objet de l'invention, comportent au moins une gorge destinée à recevoir l'âme sans fin, ladite gorge ayant une forme telle que l'âme sans fin puisse y être introduite à force, lors du montage des maillons transversaux, et ne puisse s'en échapper en service.

Dans une variante, le système de guidage des maillons transversaux entre eux est constitué, sur chacune des faces, par un ensemble composé d'un pion de centrage et d'un évidement situés sur la partie supérieure du maillon transversal.

Dans une autre variante, le système de guidage des maillons transversaux entre eux est constitué d'un ensemble de tenons de positionnement, disposés en symétrie axiale et situés dans la base du maillon transversal.

La conception des éléments constitutifs du dispositif de transmission objet de l'invention et de leurs variantes, illustrés à titre d'exemples non limitatifs, sera mieux comprise à la lecture de la description accompagnant les dessins dans lesquels :
- la figure 1 schématise le principe de fonctionnement de la transmission à variation continue ;
- la figure 2 représente, en coupe, la constitution de l'âme sans fin ;
- la figure 3 illustre une forme particulière de maillon transversal destiné à une transmission à âme sans fin, unique, en forme de bande ;
- la figure 4 décrit un maillon transversal destiné à une transmission comportant deux âmes sans fin, en forme de bandes ;
- la figure 5 montre une variante de maillon transversal utilisable dans une transmission comportant deux âmes sans fin, en forme de câbles ;
- la figure 6 illustre un autre dispositif de guidage des maillons transversaux, qui est du type à tenons de positionnement
- la figure 7 présente une disposition relative de l'âme sans fin et des maillons transversaux permettant d'optimiser le rendement de l'organe de transmission ;
- la figure 8 résume l'étude de localisation des contraintes dans un maillon transversal, en fonction de la charge appliquée ;
- la figure 9 illustre l'influence des paramètres de forme sur les niveaux de contraintes du maillon transversal.

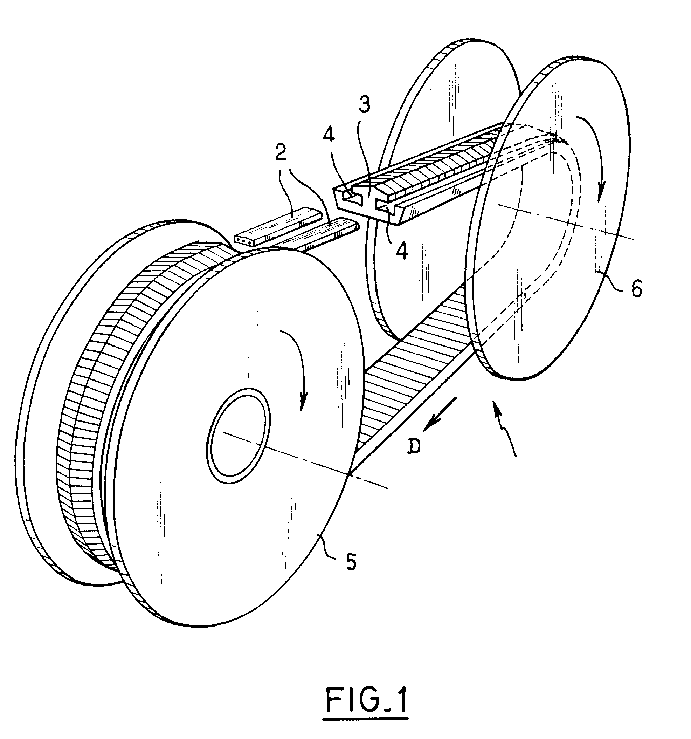

La figure 1 schématise le principe de fonctionnement de la transmission à variation continue de vitesse, dans le cas où les maillons sont destinés à recevoir deux âmes en forme de bandes.

Le dispositif de transmission (1) constitué des âmes sans fin (2), ici en forme de bandes, et des maillons transversaux (3), contigus, ici représentés dans la variante comportant deux gorges (4), est destiné à assurer l'entraînement dans la direction (D) de la poulie à gorge conique (5) par la poulie (6), lesdites poulies (5) et (6) étant à diamètre variable, pour réaliser une transmission à variation de vitesse continue et progressive.

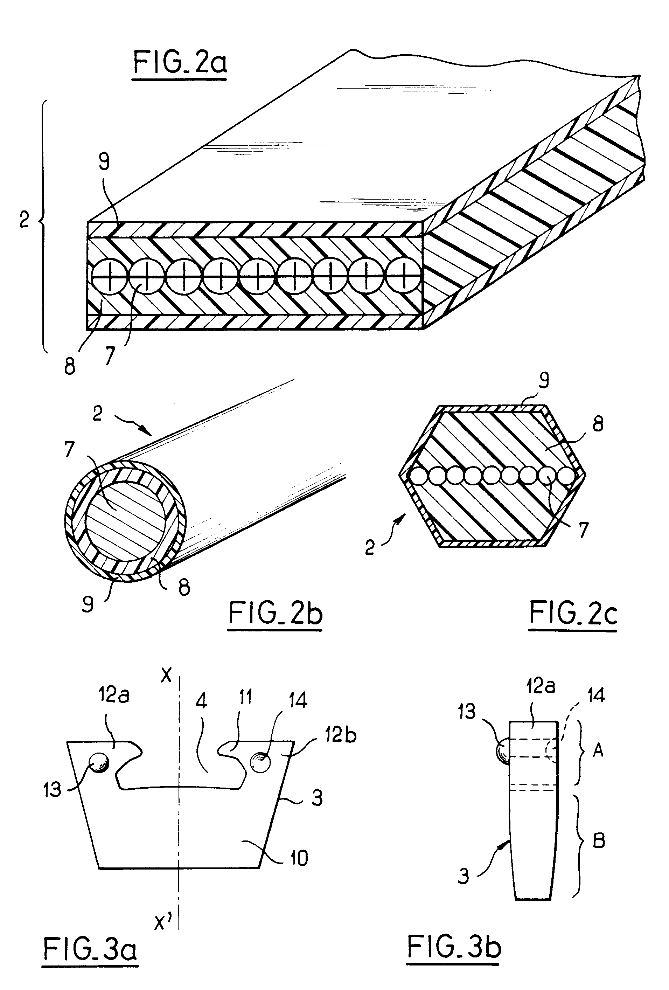

La transmission se fait par poussée d'un maillon transversal (3) sur le maillon transversal (3) qui le précède, le guidage des maillons transversaux entre eux étant assuré par un dispositif mécanique appartenant aux maillons dont différentes variantes seront illustrées sur les figures 3, 4 et 5. Les maillons transversaux (3) travaillent donc en compression, l'âme (2) ayant un rôle de soutien, absorbe la tension et la transmet aux maillons transversaux (3), par appui, tout en compensant la force centrifuge qui s'exerce en service.

A titre de variantes, le dispositif de transmission (1) pourrait être constitué de deux âmes sans fin (2), sous forme de câbles de section sensiblement circulaire, ou sous forme de courroie hexagonale et de maillons (3) dont la gorge (4) présenterait une configuration adaptée à la section de l'âme sans fin, ou bien le dispositif de transmission (1) pourrait ne comporter qu'une seule âme sans fin (2), sous forme de bande, avec des maillons (3) comportant une seule gorge (4), de forme appropriée à celle de l'âme sans fin.

Ces variantes sont illustrées sur la figure 2 en ce qui concerne la forme des âmes sans fin (2) et sur les figures 3 à 5 pour ce qui concerne la forme des maillons (3).

La figure 2 représente, en coupe, la constitution de l'âme sans fin qui peut être réalisée en une bande plate, de section sensiblement rectangulaire, comme illustré sur la vue 2a, ou en un câble, de section sensiblement circulaire, comme illustré sur la vue 2b.

L'âme (2), représentée sur la vue 2a, est constituée d'une courroie plate, préférentiellement mais non obligatoirement, du type dit à flancs nus ou à bords tranchés, et comporte un élément de renforcement (7) disposé longitudinalement, et réalisé dans un matériau quasi inextensible, tel qu'un fil ou un retors d'aramide, un fil ou un câble métallique, c'est à dire un composé dont l'allongement à la rupture est, au plus, égal à dix pour cent.

L'élément de renforcement (7) est noyé dans une base (8), réalisée dans une composition polymérique souple et lui est intimement lié par des moyens physico-chimiques bien connus de l'industrie de transformation des polymères.

L'épaisseur de la base (8) de l'âme sera relativement faible, au dessus et au dessous de l'élément de renforcement (7), et sera ajustée à la dimension du dispositif de transmission.

La composition polymérique, constituant la base (8) de l'âme (2), devra être souple afin de ne pas empêcher le dispositif de transmission de s'enrouler sur les poulies. Elle recevra une formulation adaptée à l'application, c'est-à-dire lui permettant de résister aux contraintes de fatigue, d'échauffement et de vieillissement que rencontrent les organes de transmission, en service.

Les polymères de base utilisables dans la composition polymérique souple peuvent être choisis parmi la gamme des caoutchoucs ou des élastomères, naturels ou synthétiques, adaptés à l'application, tels que, à titre d'exemples non limitatifs, du polychloroprène, un copolymère de butadiène et d'acrylonitrile ou une de ses formes hydrogénée. Ils peuvent, également, être choisis dans la palette des polymères thermoplastiques dits "techniques", tels que le polyoxyde de propylène, un polyester-cétone, le polysulfure de phénylène, un polyamide ou un polyimide.

Si, conformément à l'invention, le coefficient de friction entre le matériau constitutif des maillons transversaux et la composition polymérique de la base (8) de l'âme sans fin (2) est au plus égal à 0,4, l'âme sans fin (2) sera constituée des deux seuls éléments précédemment décrits, à savoir l'élément de renforcement (7) et la base (8) en composition polymérique.
Dans le cas contraire, qui constitue la variante illustrée sur la vue 2a, un revêtement d'un matériau à faible coefficient de frottement (9), fin par rapport à l'épaisseur de l'âme (2), sera ajouté sur l'une au moins des faces, celle qui se trouve en contact des maillons transversaux, à laquelle il sera intimement lié.

Le revêtement de matériau à faible coefficient de frottement (9) peut être constitué, à titre d'exemples non limitatifs, d'un film de polytétrafluorure d'éthylène qui aura éventuellement reçu un traitement approprié pour assurer, par les moyens habituellement utilisés dans l'industrie de transformation des polymères, son adhérence à la composition polymérique de la base (8) de l'âme sans fin (2), ou d'un tissu synthétique à bas coefficient de frottement, tel que le polyamide, ou encore d'un vernis à inclusion d'huile.

Dans une variante où la composition polymérique de la base (8) de l'âme sans fin (2) est constituée d'une formulation à base d'élastomère, le revêtement de matériau à faible coefficient de frottement (9) sera avantageusement constitué de polyéthylène de très haute masse moléculaire (UHMWPE) qui, comme celà est connu de l'art antérieur, adhère aux élastomères, sans interposition d'adhésif, dans certaines conditions de mise en oeuvre.

Sur la vue 2a, l'âme sans fin (2) a été représenté avec deux couches de revêtement à faible coefficient de frottement (9), bien que cette configuration ne soit qu'optionnelle. De même, il est évident pour l'homme de l'art qu'il est possible de constituer l'âme sans fin (2), non plus à bords tranchés comme illustré, mais en l'enrobant totalement du revêtement à faible coefficient de frottement (9).

La vue 2b illustre la constitution de l'âme sans fin (2), formée d'un câble de section sensiblement circulaire, comportant un élément de renforcement inextensible (7), et d'une base (8), en composition polymérique, lui adhérant intimement.

Pour des raisons évidentes d'équilibre de l'organe de transmission, il est nécessaire, dans cette disposition, d'utiliser deux âmes sans fin du type à section sensiblement circulaire, donc, en corollaire, des maillons comportant deux gorges.

Comme dans le cas de l'âme sans fin (2), sous forme de bande, un revêtement à faible coefficient de frottement (9) peut, éventuellement, être ajouté en surface, pour améliorer le glissement entre ladite âme sans fin (2) et les maillons transversaux.

La vue 2c montre, en coupe, une autre forme de l'âme sans fin (2), constituée d'une courroie hexagonale, dont l'élément de renforcement (2), constitué de retors textiles, longitudinaux, est situé dans la zone médiane, et dont la base (8) est réalisée dans une composition polymérique de formulation adaptée.
Dans la variante représentée, le revêtement à faible coefficient de frottement (9), extérieur, entoure complètement l'âme sans fin (2), mais il est bien évident, pour l'homme de l'art, que le revêtement à faible coefficient de frottement pourrait n'être placé que sur la face de l'âme sans fin qui se trouve en contact avec les maillons transversaux.

Les maillons transversaux, non représentés, qui sont montés sur l'âme sans fin (2) de section hexagonale, comportent, bien évidemment, une ou deux gorge(s) de forme adaptée.
La réalisation des âmes sans fin (2), illustrées sur les vues 2a, et 2b, relève de la technique de fabrication des courroies de transmission classiques.

Afin d'équilibrer parfaitement les âmes sans fin décrites dans les vues 2a et 2c, l'élément de renforcement sera préférentiellement constitué d'une alternance de retors textiles ou de câbles métalliques, ayant une torsion S et une torsion Z.

La réalisation de l'âme sans fin (2), illustrée sur la vue 2c, qui est un tore, s'apparente à la technologie utilisée pour la fabrication des courroies dites "Grommet" ou pour la production des talons de pneumatiques.

D'autres méthodes permettent également de réaliser une âme sans fin, quelle que soit sa section. Il est possible, par exemple d'utiliser un prépreg de résine telle que du polyester renforcé de fibres courtes, ou de mouler un composite commercial appelé "Fibre Renforcée Thermoplastique" ou encore un composé fibreux à matrice époxy. Toutes les techniques de fabrication des âmes sans fin sont familières à l'industrie de transformation des caoutchoucs et des polymères.

La figure 3 illustre une forme particulière de maillon transversal, destiné à une transmission comportant une âme sans fin unique, en forme de bande.

La vue 3a, qui est une vue de face, montre la forme générale du maillon transversal (3), sensiblement trapezoïdale, dont la base (10) comporte, à sa partie supérieure, une gorge (4), partiellement fermée, au sommet, par les ergots (11) des bords supérieurs, en forme de harpons, (12a) et (12b) dudit maillon transversal (3), la gorge (4) étant destinée à recevoir l'âme sans fin, et les ergots (11) des harpons latéraux (12) et (12b) étant destinés à empêcher ladite âme sans fin de sortir de la gorge (4), en fonctionnement.

L'un des harpons latéraux (12a) porte un pion de centrage (13), approximativement situé au centre de sa longueur, l'autre harpon latéral (12b) comportant un évidement (14), symétrique par rapport à l'axe (XX′), dont le rayon est légèrement supérieur à celui du pion de centrage (13).

L'autre face du maillon transversal (3), non visible sur cette figure, comporte, en opposition du pion de centrage (13) du harpon latéral (12a), un évidement (14) et en opposition de l'évidement (14) du harpon latéral (12b), un pion de centrage (13).

Cette disposition relative, sur les deux faces du maillon transversal (3), des pions de centrage (13) et des évidements (14) est mise en évidence sur la vue 3b, vue de profil dudit maillon transversal (3).

La section du maillon transversal (3) peut se décomposer en deux zones (A), sensiblement rectangulaire, et (B), sensiblement trapézoïdale, la hauteur de la zone (B) étant légèrement supérieure à celle de la zone (A).

Sur le harpon latéral (12a), ici visible, le maillon transversal (3) comporte, dans la zone (A), un pion de centrage (13) sur l'une des faces et un évidement (14) sur la face opposée. Le rayon de l'évidement (14) sera préférentiellement choisi de cinq à dix pour cent supérieur au rayon du pion de centrage (13), afin que ledit pion de centrage (13) vienne s'engager dans l'évidement corres pondant, sans frottement excessif, mais avec un jeu limité pour que le guidage des maillons transversaux les uns par rapport aux autres soit efficace.

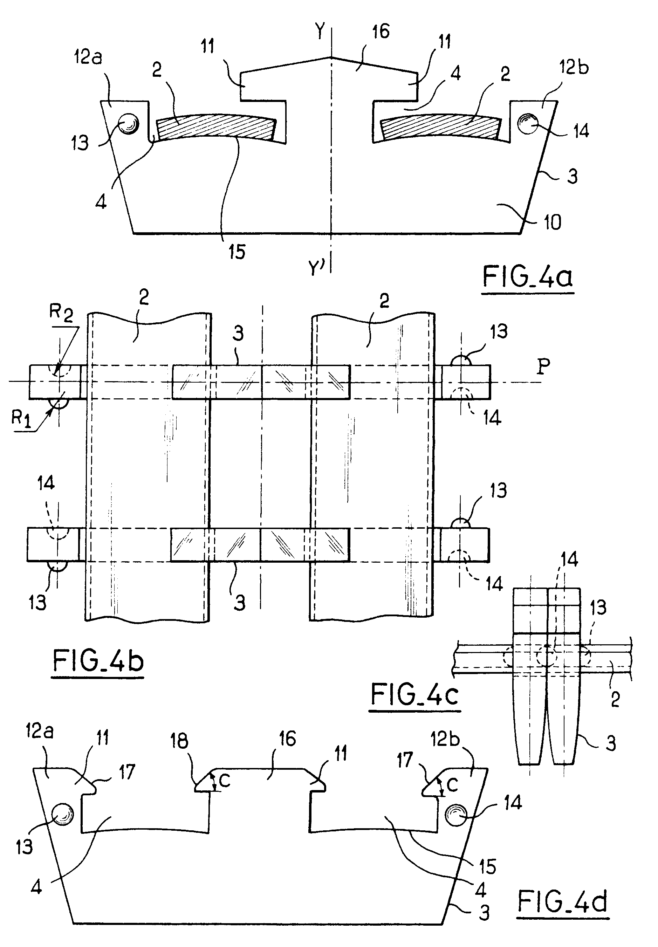

La figure 4 decrit un maillon transversal destiné à une transmission comportant deux âmes sans fin, en forme de bandes.

La vue 4a, qui est une vue de face, montre la forme générale du maillon transversal (3), sensiblement trapézoïdale, dont la base (10) comporte, à sa partie supérieure deux gorges (4), destinées à recevoir les âmes sans fin (2), et disposées symétriquement par rapport à l'axe (YY′).

Préférentiellement, le fond (15) des gorges (4) présente un léger bombé afin de favoriser le centrage de l'âme sans fin (2) au cours du fonctionnement et d'éviter que ses flancs ne viennent au contact des bords des gorges (4). A titre d'exemple, pour un maillon transversal ayant une grande base de dix-huit millimètres, le rayon du bombé du fond (15) de la gorge (4) sera choisi supérieur à vingt millimètres et, préférentiellement, supérieur à cinquante millimètres, pour éviter le déport de l'âme sans fin (2).

Lesdits gorges (4) sont partiellement fermées, au sommet, par les ergots (11) du harpon central (16), afin d'éviter que les âmes sans fin (2) ne sortent des gorges (4) en cours de fonctionnement, tout en permettant un montage aisé des maillons transversaux (3) sur les âmes sans fin (2).

L'un des harpons latéraux (12a) du maillon transversal (3) porte un pion de centrage (13), l'autre harpon latéral (12b) portant, sur la même face et disposé symétriquement par rapport à l'axe (YY′) un évidement (14).

La vue de dessus 4b illustre la disposition de deux maillons transversaux (3) - ici représentés nettement écartés l'un de l'autre, par exemple au cours de l'opération de montage - sur les deux âmes sans fin (2) en forme de bandes, chacun des maillons transversaux (3) comportant, sur chaque face, le pion de centrage (13) et l'évidement (14), le pion de centrage (13) d'une face étant situé en symétrie par rapport au plan (P) de l'évidement (14) de la face opposée.

Le rayon (R2) de l'évidement (14) sera choisi légèrement supérieur au rayon (R1) du pion de centrage (13), préférentiellement d'une valeur de cinq à dix pour cent, afin que ledit pion de centrage (13) vienne s'engager, sans effort ni frottement excessif, dans l'évidement (14) correspondant, mais avec un jeu limité pour que le guidage des maillons transversaux (3), entre eux, reste efficace.

La vue de profil 4c montre la disposition de deux maillons transversaux (3), contigus, c'est à dire en position de fonctionnement, sur les âmes sans fin (2) et met en évidence l'engagement du pion de centrage (13) de l'un des maillons transversaux (3) dans l'évidement correspondant (14) de l'autre maillon transversal (3).

La vue 4d est une vue de face d'une variante du maillon transversal destiné à une transmission à deux âmes sans fin sous forme de bandes.

Dans cette disposition, les gorges (4) du maillon transversal (3), dont le fone (15) présente un léger bombé, sont partiellement fermées au sommet par les ergots (11) des harpons latéraux (12a) et (12b) et du harpon central (16) afin d'éviter que les âmes sans fin ne sortent des gorges (4) en cours de fonctionnement.

Le harpon (12a) du maillon transversal (3) porte un pion de centrage (13) alors que le harpon (12b) est muni d'un évidement (14).

Avantageusement, dans cette disposition, les faces (17) des ergots (11) des harpons latéraux (12a) et (12b) et du harpon central (16) présentent une arête inclinée d'un angle (C), d'environ quarante-cinq degrés et des extrémités (18) arrondies, afin de faciliter le montage des âmes sans fin dans les gorges (4) du maillon transversal (3), sans provoquer de blessure auxdits âmes sans fin, ce qui pourrait se produire avec des arêtes vives.

L'introduction des âmes sans fin dans les gorges (4) des maillons transversaux (3) est une opération aisée grâce à la flexibilité latérale de l'âme sans fin et à son revêtement à faible coefficient de frottement, qui évitent les efforts et les frottements excessifs.

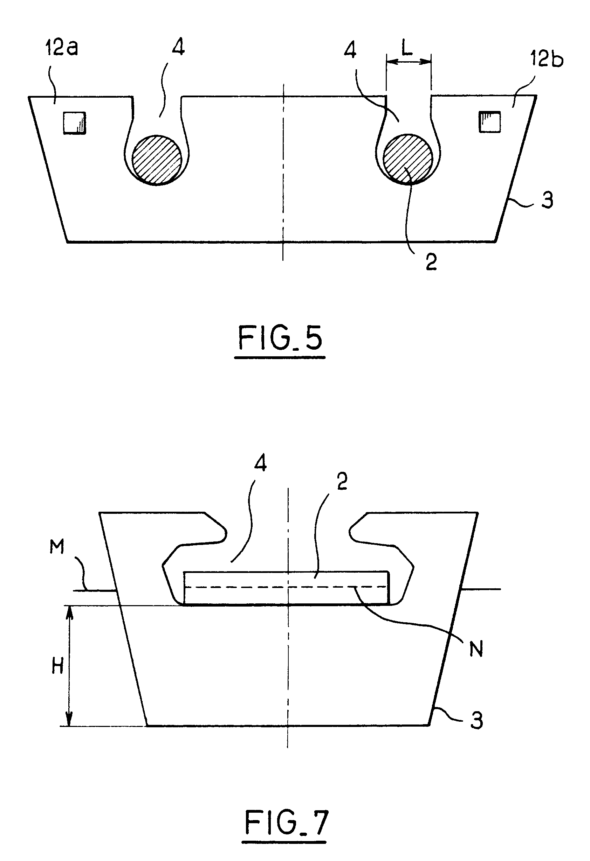

La figure 5 est une vue de face d'une variante du maillon transversal, utilisée dans une transmission comportant deux âmes sans fin en forme de câbles, de section sensiblement circulaire.

Dans cette disposition, le maillon transversal (3), dont la forme générale reste sensiblement trapézoïdale, présente deux gorges (4) destinées à recevoir les âmes sans fin (2), en forme de câbles, lesdites gorges (4) ayant une section dont la partie inférieure est semi-circulaire et dont le sommet a une largeur (L) inférieure au diamètre du demi-cercle de base, afin d'éviter que l'âme sans fin (2) ne puisse sortir, en fonctionnement, des gorges (4).

Comme dans les autres variantes décrits précédemment du maillon transversal (3), le harpon latéral (12a), porte un pion de centrage (13), ici représenté de forme carrée sur la face visible, et un évidement, symétrique, de même forme, mais dont le côté sera de cinq à dix pour cent plus grand, sur la face non visible, alors que le harpon latéral (12b) porte un évidement (14) - ici carré -, sur la face visible, et un pion de centrage, symétrique, sur la face non visible.

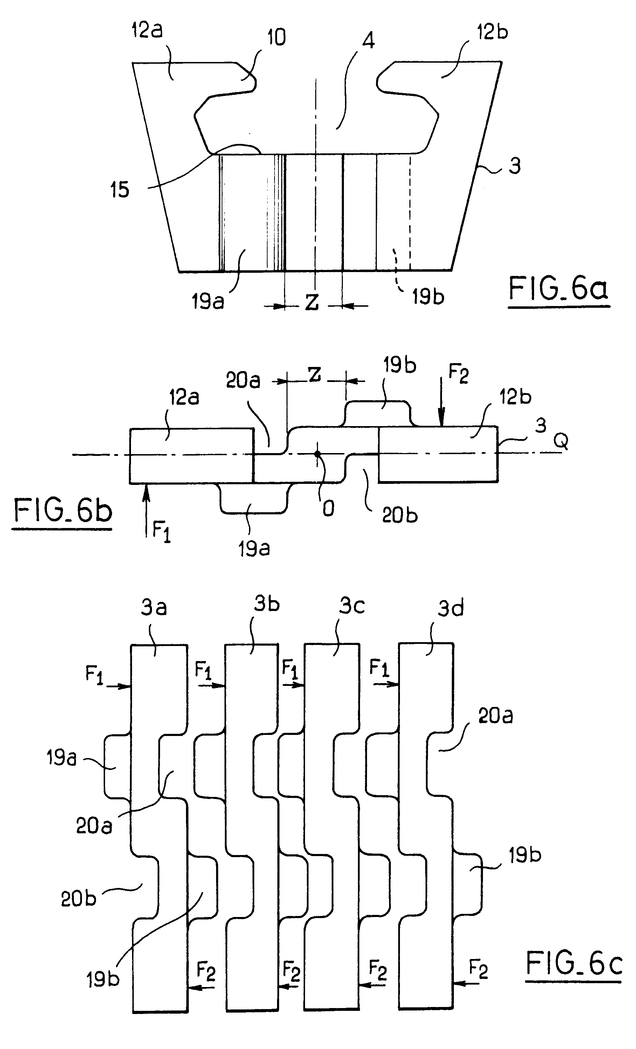

La figure 6 illustre un autre dispositif de guidage des maillons transversaux, guidage du type à tenons de positionnement.

L'exemple illustré est un maillon transversal (3) à gorge unique (4), mais il est bien évident que la description ci-dessous s'adapterait, sans difficulté, au cas d'un maillon à double gorge.

La vue 6a est une vue de face du maillon transversal (3), comportant une gorge (4) destinée à recevoir une âme sans fin, ladite gorge pouvant, avantageusement, présenter un fond (15) légèrement bombé et étant partiellement fermée, à sa partie supérieure, par les ergots (11) des harpons latéraux (12a) et (12b), dépourvus de pions de centrage et d'évidements.

Le guidage des maillons transversaux entre eux est assuré par une conformation particulière de la base (10) desdits maillons transversaux, constitués de tenons de positionnement (19a) et (19b), disposés de part et d'autre d'une zone centrale (Z), venant en saillie sur chaque face et en retrait pour créer un évidement correspondant (20a) ou (20b) sur la face opposée, par rapport au plan médian du maillon transversal (3).

La vue de dessus 6b explicite la disposition des tenons de positionnement (19a) et (19b) par rapport au plan médian (Q) du maillon transversal, c'est à dire au plan qui divise en deux parties d'épaisseur égale les harpons (12a) et (12b) ainsi que la zone centrale (Z).

Il apparait nettement que le tenon de positionnement (19a) se trouve en saillie, sur la face (F1) et correspond à l'évidement (20a) sur la face (F2) et, symétriquement, que le tenon (19b) se trouve en saillie sur la face (F2) du maillon transversal (3) et correspond à l'évidement (20b) sur la face (F1) du maillon transversal (3).

Dans cette disposition, le maillon transversal (3) présente une symétrie axiale d'axe (O).

La vue 6c représente l'encliquetage de quelques maillons transversaux de cette variante, encliquetage illustré ici avec un jeu excessif, seulement destiné à mettre en évidence les positions relatives des maillons transversaux (3a), (3b), (3c) et (3d), dont chaque face (F1) porte un tenon (19a), et évidement (20b) et chaque face (F2) porte un tenon (19b) et un évidement (20a).

De ce fait, le tenon (19a) de la face (F1) du maillon transversal (3d) vient se loger dans l'évidement (20a) de la face (F2) du maillon transversal (3c) et, simultanément l'évidement (20b) de la face (F1) du maillon transversal (3d) reçoit le tenon (19b) de la face (F2) du maillon transversal (3c).

De même, le tenon (19a) de la face (F1) du maillon transversal (3c) vient se loger dans l'évidement (20a) de la face (F2) du maillon transversal (3b) et l'évidement (20b) de la face (F1) du maillon transversal (3c) reçoit le tenon (19b) de la face (F2) du maillon transversal (3b).

Les différentes variantes de forme des maillons transversaux illustrés dans les vues précédentes, avec l'un ou l'autre des dispositifs de guidage des maillons transversaux entre eux, présentent la même qualité d'encliquetage, caractérisée par une symétrie parfaite des faces comportant, chacune, et, en opposition, l'élément mâle, constitué soit du pion de centrage soit du tenon de positionnement, et l'élément femelle, constitué soit de l'évidement à section circulaire ou à section sensiblement rectangulaire, soit de l'évidement correspondant au tenon de positionnement.

Ces dispositions évitent la nécessité du répérage des faces des maillons transversaux pour le montage et permettent une automatisation aisée de cette opération.

Il est bien évident pour l'homme de l'art que le dispositif de guidage des maillons transversaux entre eux peut être constitué à la fois du dispositif à pion de centrage et du dispositif à tenons de positionnement.

Les maillons transversaux (3) peuvent être réalisés dans une composition polymérique à haut module, constituée d'une matrice en polymère dit "technique", thermoplastique ou thermodurcissable, renforcée soit par des charges minérales ou organiques sous forme pulvérulente, soit par des charges sphériques telles que des billes de verre, soit, encore, par des fibres textiles ou métalliques, courtes, c'est à dire dont la longueur n'excède pas 30 millimètres.

Préférentiellement, pour des raisons d'économie de fabrication, la composition polymérique qui constitue le maillon transversal sera moulable par injection.

A titre d'exemples non limitatifs, le polymère de la matrice sera choisi, dans la gamme des polymères thermoplastiques, parmi les résines polyester thermoplastiques, les résines polyamide ou polyamide semi-organique ou polyimide, et, dans la gamme des polymères thermodurcissables, parmi les résines polyester thermodurcissables, les résines époxy, les résines formo-phénoliques ou les résines urée-formol.

Parmi les charges pulvérulentes, le talc, la craie ou encore des métaux en poudre, comme, par exemple l'aluminium, seront avantageusement utilisés.

Un autre mode de renforcement discontinu du polymère de la matrice sera constitué d'une fibre courte à haut module telle que la fibre d'aramide, de la fibre de verre, de la fibre de carbone ou de la fibre de bore, dans des proportions variant de dix à soixante pour cent, en poids, par rapport au poids du polymère de base.

C'est ainsi que les maillons transversaux (3) pourront être réalisés en composites constitués, à titre d'exemples non limitatifs, à partir des combinaisons ci-dessous.
- résine polyester thermoplastique + craie
- résine polyester thermoplastique + talc
- résine polyester thermoplastique + poudre métallique
- résine polyester thermoplastique + billes de verre
- résine polyester thermoplastique + fibres courtes d'aramide
- résine polyester thermoplastique + fibres courtes de verre
- résine polyester thermoplastique + fibres courtes de carbone
- résine polyester thermoplastique + fibres courtes de bore
- résine polyamide + craie
- résine polyamide + talc
- résine polyamide + poudre métallique
- résine polyamide + billes de verre
- résine polyamide + fibres courtes d'aramide
- résine polyamide + fibres courtes de verre
- résine polyamide + fibres courtes de carbone
- résine polyamide + fibres courtes de bore
- résine polyamide semi aromatique + craie
- résine polyamide semi aromatique + talc
- résine polyamide semi aromatique + poudre métallique
- résine polyamide semi aromatique + billes de verre
- résine polyamide semi aromatique + fibres courtes d'aramide
- résine polyamide semi aromatique + fibres courtes de verre
- résine polyamide semi aromatique + fibres courtes de carbone
- résine polyamide semi aromatique + fibres courtes de bore
- résine polyimide + craie
- résine polyimide + talc
- résine polyimide + poudre métallique
- résine polyimide + billes de verre
- résine polyimide + fibres courtes d'aramide
- résine polyimide + fibres courtes de verre
- résine polyimide + fibres courtes de carbone
- résine polyimide + fibres courtes de bore
- résine polyester thermodurcissable + craie
- résine polyester thermodurcissable + talc
- résine polyester thermodurcissable + poudre métallique
- résine polyester thermodurcissable + billes de verre
- résine polyester thermodurcissable + fibres courtes d'aramide
- résine polyester thermodurcissable + fibres courtes de verre
- résine polyester thermodurcissable + fibres courtes de carbone
- résine polyester thermodurcissable + fibres courtes de bore
- résine époxy + craie
- résine époxy + talc
- résine époxy + poudre métallique
- résine époxy + billes de verre
- résine époxy + fibres courtes d'aramide
- résine époxy + fibres courtes de verre
- résine époxy + fibres courtes de carbone
- résine époxy + fibres courtes de bore
- résine formo-phénolique + craie
- résine formo-phénolique + talc
- résine formo-phénolique + poudre métallique
- résine formo-phénolique + billes de verre
- résine formo-phénolique + fibres courtes d'aramide
- résine formo-phénolique + fibres courtes de verre
- résine formo-phénolique + fibres courtes de carbone
- résine formo-phénolique + fibres courtes de bore
- résine urée-formol + craie
- résine urée-formol + talc
- résine urée-formol + poudre métallique
- résine urée-formol + billes de verre
- résine urée-formol + fibres courtes d'aramide
- résine urée-formol + fibres courtes de verre
- résine urée-formol + fibres courtes de carbone
- résine urée-formol + fibres courtes de bore.

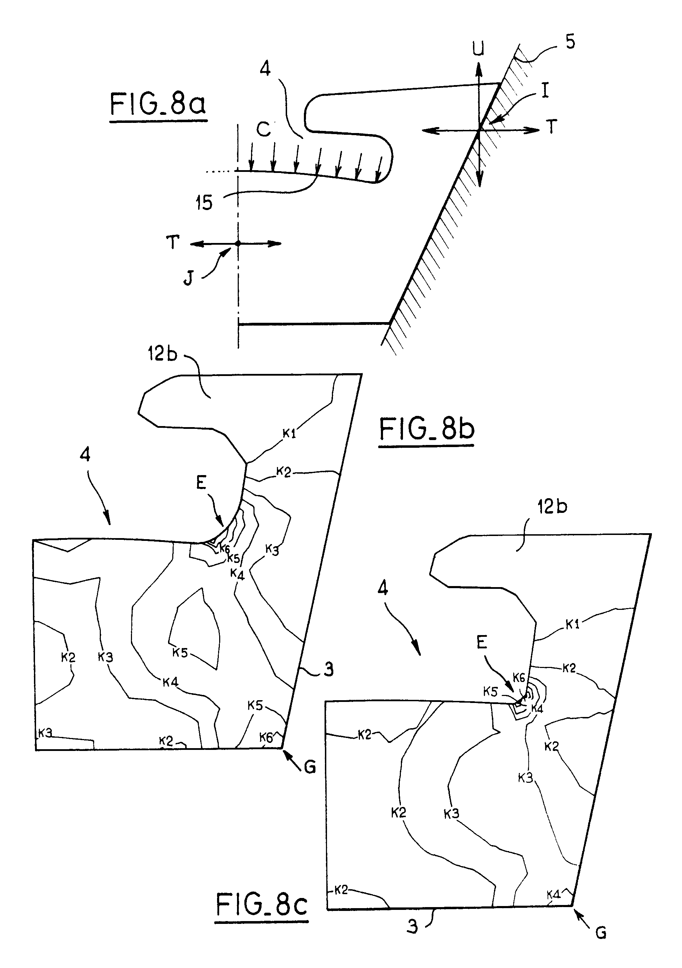

La figure 7 présente une disposition relative de l'âme sans fin et des maillons transversaux permettant d'optimiser le rendement de l'organe de transmission.

Cette disposition est illustrée avec un maillon transversal (3) à gorge unique (4), mais serait aisément transposable à un maillon transversal à double gorge.

Elle a pour objet de réaliser un organe de transmission dans lequel il ne se produit, au cours du fonctionnement, qu'un glissement relatif aussi faible que possible - et idéalement égal à zéro - des maillons transversaux (3) par rapport à l'âme sans fin (2).

Pour expliciter la disposition relative des maillons et de l'âme sans fin, il sera défini dans l'organe de transmission, par similitude avec une courroie trapézoïdale classique, "une ligne primitive" qui, selon la définition donnée par la norme ISO 1081-1980, est "toute ligne circonférentielle qui, dans la courroie, conserve la même longueur quand celle-ci est courbée perpendiculairement à sa base".

Rapportée au fonctionnement de la courroie dans les poulies à gorge trapézoïdale, la ligne primitive est donc la ligne dans laquelle le glissement de la courroie, du fait de sa flexion, par rapport à la poulie est minimal.

De la même manière, il est possible de définir, dans l'organe de transmission à maillons poussants objet de l'invention, une ligne primitive qui se situe dans la partie supérieure de l'ensemble des maillons transversaux. Ainsi, rapportée au niveau du maillon transversal élémentaire, il est défini une "ligne primitive fictive du maillon transversal", élément unitaire de la ligne primitive de l'organe de transmission.

La disposition relative des maillons transversaux (3) sur l'âme sans fin (2), qui permet d'optimiser le rendement de l'organe de transmission en réduisant les frottements et les glissements - donc la fatigue par échauffement, - consiste à faire coïncider la fibre neutre (N) de l'âme sans fin (2) avec la ligne primitive fictive (M) du maillon transversal, ce qui s'obtient par un positionnement adéquat du dispositif de guidage des maillons transversaux entre eux dans les harpons (12a) et (12b), s'il s'agit du dispositif pion/évidement, ou par la hauteur (H) de la base (10) du maillon transversal (3), dans le cas du dispositif de guidage à tenons de positionnement.

Le type de dispositif technique (pion et ou tenon de positionnement et évidement correspondant), retenu pour le guidage des maillons transversaux entre eux, est sans importance sur la disposition relative des maillons transversaux (3) et de l'âme sans fin (2), sous réserve que la position des éléments dudit dispositif dans le maillon transversal assure la concordance de la ligne primitive fictive du maillon transversal et de la fibre neutre de l'âme sans fin.

Avantageusement, dans l'une quelconque des configurations du maillon transversal (3), à simple ou double gorge (4), le fond (15) de ladite gorge sera revêtu d'une faible couche d'un matériau offrant une faible résistance au frottement, ou résistant à l'abrasion.

A titre d'exemple non limitatif, un tel revêtement, fin, du fond (15) de la gorge (4) peut être constitué de métal, tel que de l'acier inoxydable - l'ensemble du corps du maillon transversal (3) restant, lui, non métallique - il peut également être constitué d'un polymère tel que du polyéthylène ou d'un matériau autolubrifié contenant du bisulfure de mobydène, par exemple.

Il est bien évident, pour l'homme de l'art, que ledit revêtement anti-abrasion ou à faible coefficient de frottement adhèrera, de manière intime, soit par affinité directe, soit par liaison physico-chimique, au matériau composite constituant le reste du maillon transversal (3).

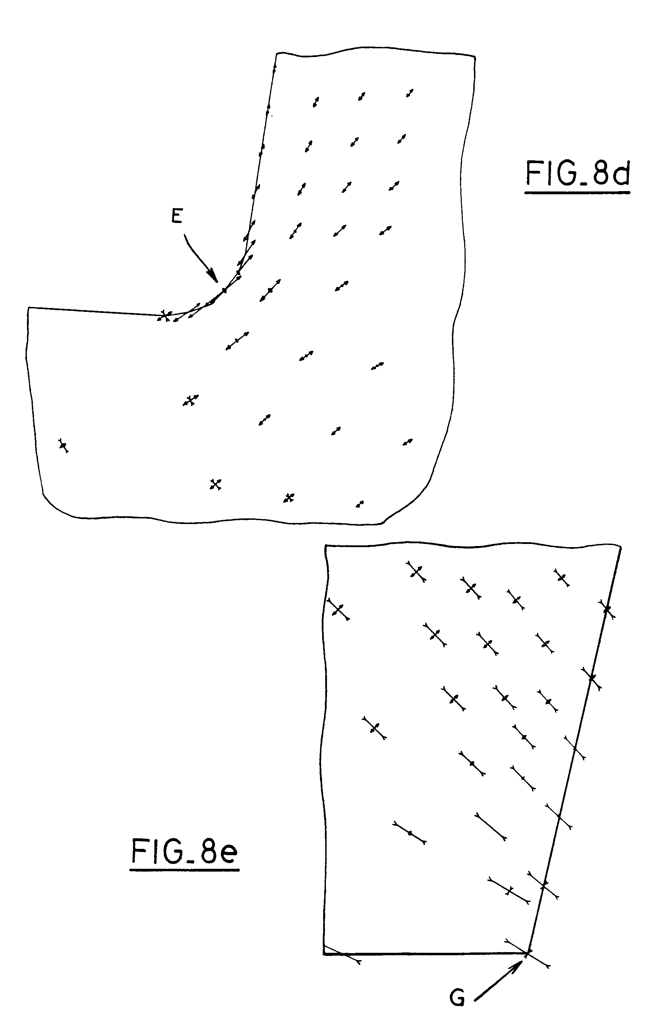

La figure 8 résume l'étude de localisation des contraintes dans un maillon transversal, en fonction de la charge appliquée.

Ladite étude est basée sur la loi de fatigue mécanique de Von Mises, bien connue des mécaniciens, qui permet de déterminer les localisations de contraintes dans un matériau, en fonction des sollicitations.

La vue 8a explique, sur un demi-maillon transversal (3), les paramètres de l'étude, une charge (C), qui est équivalente à la tension de l'âme sans fin, étant uniformément répartie sur le fond (15) de la gorge (4), avec un blocage selon les directions (U) et (T), dans la zone (I), au contact de la poulie (5), et selon la direction (T), dans la zone (J), sur l'axe de symétrie du maillon transversal (3).

Les vues 8b et 8c représentent, à titre d'exemples non limitatifs, les courbes des isovaleurs de contraintes sur des maillons transversaux (3), identiques, dont la largeur de la grande base était de dix-huit millimètres, dans deux cas de charge, où (C) est égal à 0,8 DaN par millimètre carré pour la vue 8b, et (C) est égal à 4,8 DaN par millimètre carré pour la vue 8c.

Le tableau ci-après résume quelques valeurs relatives aux niveaux de contraintes rencontrées dans les deux cas illustrés en 8b et 8c.

| Niveaux de contraintes | C = 0,8 DaN/mm2 vue 8b | C = 4,8 DaN/mm2 vue 8c |
|---|---|---|
| K1 | 0,37 | 0,55 |
| K3 | 1,00 | 1,65 |
| K5 | 1,63 | 2,75 |
| K7 | 2,26 | 3,85 |
| K8 | 2,57 | 4,42 |

Les vues 8b et 8c montrent, à l'évidence, que les zones du maillons transversal (3) les plus sollicitées sont, d'une part, la zone (E) du raccordement entre le fond (15) de la gorge (4) et le harpon latétal (12b) et, d'autre part, la zone (G), à l'extrémité de la petite base du maillon transversal (3).

Les vues 8d et 8e illustrent les contraintes principales, en dimension et en valeurs, dans la zone (E) pour la vue 8d et dans la zone (G) pour la vue 8e, pour le cas où la charge uniformément répartie (C) est égale 4,8 DaN/mm2.

Dans les deux zones (E) et (G), les contraintes dans le plan, composantes résultant des sollicitations sont obliques, les contraintes principales dans la zone (G) qui sont essentiellement des contraintes de compression étant sensiblement orthogonales aux contraintes principales dans la zone (E), qui sont essentiellement des contraintes de traction.

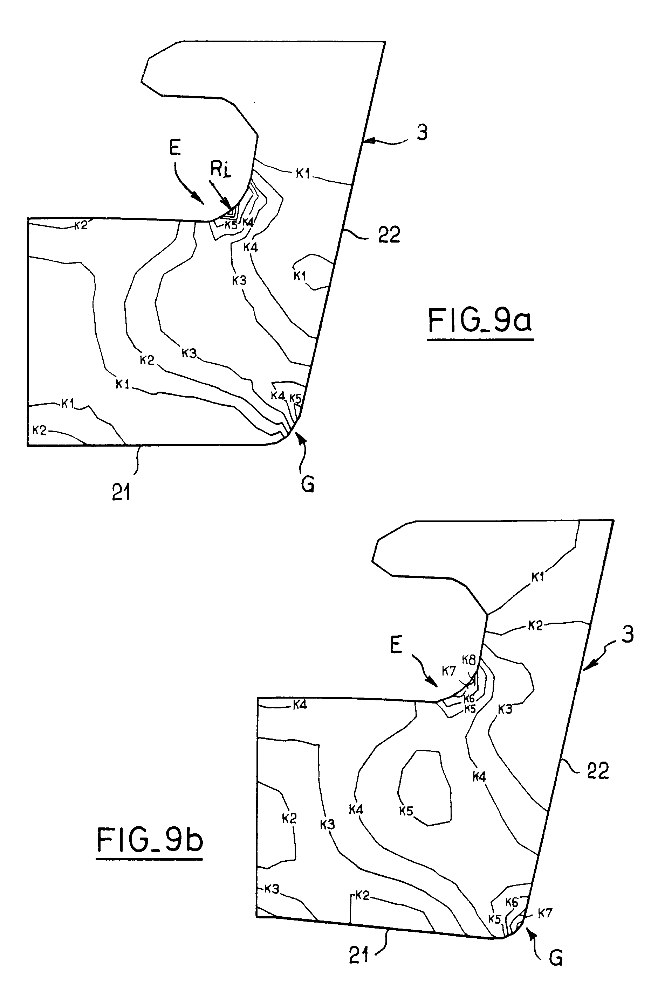

La figure 9 illustre l'influence des paramètres de forme du maillon transversal sur les niveaux de contrainte, dans le cas où la charge uniformément répartie (C) est égale à 0,8 DaN par millimètre carré, l'étude étant menée sur un maillon transversal (3) dont la grande base a une longueur de dix-huit millimètres.

La vue 9a met en évidence l'influence d'un arrondi de rayon (R3) de 0,5 millimètres dans la zone (G), avec un rayon interne (Ri) de 1,5 millimètres dans la zone (E) et une petite base (21) rectiligne.

La vue 9b met en évidence l'influence supplémentaire d'une légère convexité de la petite base (21) du maillon transversal (3).

Les vues 9a et 9b sont à comparer avec la vue 8b, les valeurs des niveaux de contraintes correspondant étant données, à titre d'exemples non limitatifs, dans le tableau ci-après.

| Paramètres de forme | vue 8b | vue 9a | vue 9b |
|---|---|---|---|
| Zone E | (Ri) = 1,5 | (Ri) = 1,5 | (Ri) = 1,5 |
| Zone G | angle vif | (R3) = 0,5 | (R3) = 0,5 |
| Petite base(21) | rectiligne | rectiligne | convexe |

| Niveaux de contraintes | C = 0,8 | C = 0,8 | C = 0,8 |
|---|---|---|---|
| K1 | 0,37 | 1,01 | 0,34 |
| K3 | 1,00 | 1,61 | 1,01 |
| K5 | 1,63 | 2,21 | 1,69 |
| K7 | 2,26 | 2,82 | 2,37 |
| K8 | 2,57 | 3,12 | 2,71 |

Dans la zone (E), les contraintes atteignent, les niveaux (K5) et (K8), dans la configuration de la vue 8b, soit des valeurs de l'ordre de 1,6 DaN par millimètre carré à 2,8 DaN par millimètre carré . Elles atteignent, des niveaux de (K5) à (K8), dans les configurations des vues 9a et 9b, soit des valeurs de l'ordre de 2,2 DaN par millimètre carré à 3,1 DaN par millimètre carré, d'une part, et de l'ordre de 1,7 DaN par millimètre carré à 2,7 DaN par millimètre carré, d'autre part.

L'arrondi de raccordement de rayon (R3) de la petite base (21) avec le flan (22) du maillon transversal (3), dans la zone (G) et la légère convexité de la petite base (21) sont donc sans influence notable sur le niveau des contraintes dans la zone (E).

Dans la zone (G) de raccordement de la petite base (21) au flanc (22) du maillon transversal (3), les contraintes atteignent les niveaux (K5) et (K6), dans la configuration de la vue 8b, soit des valeurs de l'ordre de 2,3 DaN par millimètre carré à 2,5 DaN par millimètre carré.

Elles atteignent des niveaux de (K4) et (K5), soit des valeurs de 1,9 DaN par millimètre carré à 2,2 DaN par millimètre carré dans la configuration de la vue 9a.

L'arrondi de rayon (R3) de raccordement de la petite base (21) au flan (22) dans la zone (G) du maillon transversal (3) permet donc une amélioration du niveau des contraintes dans cette zone.

Par contre, les contraintes dans la zone (G) atteignent les niveaux (K5) à (K8), dans la configuration de la vue 9b, soit des valeurs de l'ordre de 1,7 DaN par millimètre carré à 2,8 DaN par millimètre carré à comparer aux valeurs de 1,9 DaN par millimètre carré à 2,2 DaN par millimètre carré dans la configuration de la vue 9a.

Par conséquent, la légère convexité de la petite base (21) du maillon transversal (3) a une influence néfaste sur les niveaux de contraintes de la zone (G).

Le procédé de réalisation de l'organe de transmission, objet de l'invention, comprend les trois étapes (I), (II) et (III) ci-après qui seront décrites dans la variante d'une âme sans fin dont la composition polymérique est à base de caoutchouc, le renforcement est un retors continu de polyamide aromatique, et le revêtement à faible coefficient de frottement est un film de polytétrafluorure d'éthylène, les maillons étant constitués de polyamide semi-aromatique renforcé de 30 % en poids de fibres de verre courtes.
(I) - la réalisation de l'âme sans fin comprend, dans l'ensemble cité, les opérations suivantes :
   - sur une fine couche de la composition élastomérique constituant la base, déposée sur un tambour, l'armature constituée de polyamide aromatique, qui a préalablement reçu un traitement destiné à assurer son adhérence à la composition élastomérique, est disposée par enroulement filamentaire. Une nouvelle feuille de la composition élastomérique est placée sur l'armature et reçoit une couche de colle, par exemple, une dissolution de la composition élastomérique dans un solvant approprié. Enfin un film fin de polytétrafluorure d'éthylène est apposé en surface.
   - l'ensemble composite ainsi consitué est alors soumis à un traitement thermique sous pression, par exemple dans un autoclave, destiné à assurer la liaison intime des composants entre eux et, simultanément, la vulcanisation de la composition élastomérique.
   - après refroidissement, l'ensemble composite est découpé en âme sans fin individuelles, de la largeur requise pour l'application.
(II) - la fabrication des maillons transversaux est faite, le plus avantageusement, par moulage par injection, dans un moule fermé comportant un grand nombre d'empreintes de forme appropriée.
   Sachant que, à titre d'exemple, pour constituer un organe de transmission ayant un longueur de un mètre, on peut utiliser plus de trois cents maillons transversaux, l'opération de moulage par injection desdits maillons, dans un moule à empreintes multiples, s'avère économiquement très intéressante. De plus, l'utilisation d'une composition polymérique pour la réalisation des maillons transversaux autorise une gamme de caloris qui permet, outre l'aspect esthétique, de différencier les applications.
(III) - le montage des maillons transversaux sur l'âme sans fin, opération aisément mécanisée, grâce à la parfaite symétrie des maillons transversaux, qui évite la nécessité du repérage des faces.
   L'organe de transmission à maillons poussants, objet de l'invention, présente, par rapport aux solutions connues de l'art antérieur, les avantages suivants :
   - il est d'une fabrication économique et facilement automatisable grâce à la symétrie des maillons transversaux,
   - il ne nécessite pas de moyens mécaniques de retenue de l'âme sans fin dans les gorges des maillons transversaux,
   - il est adaptable puisque le choix du nombre de maillons transversaux, pour une longueur donnée d'âme sans fin, permet de créer un jeu fonctionnel,
   - il minimise les risques d'erreurs au montage sur moteur, lorsque l'on utilise des maillons transversaux de couleur, et a, en outre, un aspect esthétique,
   - il fonctionne en frottement sec, c'est à dire qu'il ne nécessite pas d'installation de lubrification et de filtration et évite les vidanges,
   - il est relativement silencieux, puisque les maillons transversaux, comme l'âme sans fin, sont réalisés en compositions polymériques et non totalement en métal,
   et
   - son échauffement en service est réduit, grâce à la quasi égalité, entre la vitesse de l'âme sans fin et la vitesse des maillons, conduisant à un glissement minimal - voire nul -, obtenue lorsque la ligne primitive fictive des maillons transversaux coïncide avec la fibre neutre de l'âme sans fin.

Sans sortir du cadre de l'invention, l'homme de l'art pourra apporter diverses modifications, tant à l'âme sans fin qu'aux maillons transversaux constitutifs de l'organe de transmission, en particulier dans les formes desdits composants, dans les formulations des compositions polymériques et les natures des renforcements.

## Revendications

1. Organe de transmission (1) à maillons transversaux (3) poussants, pour variateur continu de vitesse, fonctionnant par frottement sec et composé d'au moins une âme sans fin (2), non métallique, souple, quasiment inextensible longitudinalement, et de maillons transversaux (3), également non métalliques, comportant chacun au moins une gorge (4) dans laquelle vient s'engager l'âme sans fin (2), et présentant un coefficient de friction entre l'âme sans fin (2) et les maillons transversaux (3) au plus égal à 0,4 et étant caractérisé en ce que lesdits maillons transversaux (3), parfaitement symétriques axialement, présentent sur chacune de leurs faces (F1) et (F2) un dispositif de guidage des maillons transversaux entre eux constitué d'un élément en relief, pion de centrage (13) ou tenon de positionnement (19) associé à un évidement (14,20), ne nécessitant pas le repérage du sens de montage des maillons transversaux (3) sur l'âme sans fin (2).

2. Organe de transmission selon la revendication 1, caractérisé en ce que l'âme sans fin (2) est constitué d'une courroie plate à flancs nus, comportant un renforcement longitudinal, composé de fils ou de retors textiles ou de fils ou cables métalliques, ladite âme sans fin (2) ayant au moins la face en contact avec les maillons transversaux (3) revêtue d'un matériau à faible coefficient de frottement (9).

3. Organe de transmission selon la revendication 1, caractérisé en ce que l'âme sans fin (2) est constituée d'une courroie de section hexagonale, comportant un renforcement longitudinal, composé de fils ou de retors textiles ou de fils ou cables métalliques, ladite âme sans fin (2) ayant au moins la face en contact avec les maillons transversaux (3) revêtue d'un matériau à faible coefficient de frottement (9).

4. Organe de transmission selon la revendication 1, caractérisé en ce qu'il comporte deux âmes sans fin (2), de section sensiblement circulaire, revêtues, en surface, d'un matériau à faible coefficient de frottement (9).

5. Organe de transmission selon l'une des revendications 2 à 4, caractérisé en ce que le revêtement à faible coefficient de frottement (9) de l'âme sans fin (2) est un film de polytétrafluorure d'éthylène, intimement lié à la composition polymérique constituant la base de l'âme sans fin (2).

6. Organe de transmission selon l'une des revendications 2 à 4, caractérisé en ce que le revêtement à faible coefficient de frottement (9) de l'âme sans fin (2) est un vernis à inclusion d'huile.

7. Organe de transmission selon l'une des revendications 2 à 4, caractérisé en ce que la base de l'âme sans fin (2) est réalisée en composition élastomérique et que le revêtement à faible coefficient de frottement (9) est du polyéthylène de très haute masse moléculaire.

8. Organe de transmission selon l'une des revendications 2, 3, 5 ou 7, caractérisé en ce que le renforcement (7) de l'âme sans fin (2) est constitué d'une alternance de câbles métalliques à torsion en S et à torsion en Z.

9. Organe de transmission selon l'une des revendications 2, 3, 5 ou 7, caractérisé en ce que le renforcement (7) de l'âme sans fin (2) est constitué d'une alternance de retors textiles à torsion en S et à torsion en Z.

10. Organe de transmission selon la revendication 1, caractérisé en ce que le dispositif de guidage des maillons transversaux (3) entre eux est constitué, sur les harpons (12a) et (12b) de chacune des faces (F1) et (F2), d'un pion de centrage (13) et d'un évidement (14), le harpon (12a) portant le pion de centrage (13) sur la face (F1) et l'évidement (14) sur la face (F2) et, réciproquement, le harpon (12b) portant l'évidement (14) sur la face (F1) et le pion de centrage (13) sur la face (F2).

11. Organe de transmission selon la revendication 1, caractérisé en ce que de dispositif de guidage des maillons transversaux (3) entre eux est constitué, sur chacune des faces (F1) et (F2), d'un ensemble de tenons (19) de positionnement et d'évidements (20), disposés dans la base (10) des maillons transversaux (3).

12. Organe de transmission selon la revendication 1, caractérisé en ce que le dispositif de guidage des maillons transversaux entre eux est constitué, à la fois par l'ensemble pion de centrage (13) et évidement (14), situé dans les harpons (12a) et (12b) et par l'ensemble des tenons de positionnement (19) et des évidements (20), situés dans la base (10) des maillons transversaux (3).

13. Organe de transmission selon l'une des revendications 1 ou 10 à 12, caractérisé en ce que le fond (15) de la gorge (4) du maillon transversal (3) comporte un revêtement à faible coefficient de frottement.

14. Organe de transmission selon l'une des revendications 1 ou 10 à 12, caractérisé en ce que le fond (15) de la gorge (4) du maillon transversal (3) comporte un revêtement possédant des propriétés de résistance à l'abrasion.

15. Organe de transmission selon l'une des revendications 1 ou 10 à 14, caractérisé en ce que les maillons transversaux (3) sont réalisés dans un composite à matrice polymérique thermoplastique et à renforcement par fibres de longueur au plus égale à trente millimètres.

16. Organe de transmission selon l'une des revendications 1 ou 10 à 14, caractérisé en ce que les maillons transversaux (3) sont réalisés dans un composite à matrice polymérique thermodurcissable et à renforcement par fibres de longueur au plus égale à trente millimètres.

17. Organe de transmission selon l'une des revendications 1 ou 10 à 16, caractérisé en ce que le renforcement du composite constituant les maillons transversaux (3) est une polyamide aromatique, utilisée en proportion de dix à soixante pour cent du poids de la matrice polymérique.

18. Organe de transmission selon l'une des revendications 1 ou 10 à 16, caractérisé en ce que le renforcement du composite constituant les maillons transversaux (3) est de la fibre de verre utilisée en proportion de dix à soixante pour cent du poids de la matrice polymérique.

19. Organe de transmission selon l'une des revendications 1 ou 10 à 16, caractérisé en ce que le renforcement du composite constituant les maillons transversaux (3) est de la fibre de carbone utilisée en proportion de dix à soixante pour cent du poids de la matrice polymérique.

20. Organe de transmission selon l'une des revendications 1 ou 10 à 16, caractérisé en ce que le renforcement du composite constituant les maillons transversaux (3) est de la fibre courte de bore utilisée en proportion de dix soixante pour cent du poids de la matrice polymérique.

21. Organe de transmission selon l'une des revendications 2 à 6, caractérisé en ce que l'âme sans fin (2) est réalisée par moulage d'un composite dit "Fibre Renforcée Thermoplastique".

22. Organe de transmission selon l'une des revendications 10 à 21, caractérisé en ce que le dispositif de guidage des maillons transversaux (3) entre eux est disposé de manière à ce que, après montage, la ligne primitive (M) desdits maillons transversaux (3) coïncide avec la fibre neutre (N) de l'âme sans fin (2).

## Claims

1. A transmission element (1) with transverse links (3) transmitting thrust, for a continuously variable speed selector, operating by dry friction and composed of at least one flexible, non-metallic, endless core (2) which it is practically impossible to extend longitudinally, and of transverse links (3), also non-metallic, each consisting of at least one throat (4) within which the endless core (2) is engaged, and giving a coefficient of friction between the endless core (2) and the transverse links (3) at most equal to 0.4 and being characterised in that said transverse links (3), being perfectly symmetrical axially, have on each of their faces (F1) and (F2) a device for guiding the transverse links in relation to each other, consisting of a relief element, centring pin (13) or positioning lug (19) connected with a recess (14, 20), which does not require the guide marking in the direction of assembly of the transverse links (3) on the endless core (2).

2. A transmission element according to claim 1, characterised in that the endless core (2) consists of a flat belt with exposed flanks, comprising a longitudinal reinforcement composed of textile yarns or twists or of metal wires or cables, said endless core (2) having at least the face in contact with the transverse links (3) coated with a material with a low coefficient of friction (9).

3. A transmission element according to claim 1, characterised in that the endless core (2) consists of a belt with a hexagonal section, comprising a longitudinal reinforcement, composed of textile yarns or twists or of metal wires of cables, said endless core (2) having at least the face in contact with the transverse links (3) coated with a material with a low coefficient of friction (9).

4. A transmission element according to claim 1, characterised in that it comprises two endless cores (2), with a substantially circular section, coated on the surface with a material with a low coefficient of friction (9).

5. A transmission element according to any of claims 2 to 4, characterised in that the coating with a low coefficient of friction (9) for the endless core (2) is a film of ethylene polytetrafluoride, intimately bound to the polymeric compound constituting the base of the endless core (2).

6. A transmission element according to any of claims 2 to 4, characterised in that the coating with a low coefficient of friction (9) for the endless core (2) is a varnish containing oil.

7. A transmission element according to any of claims 2 to 4, characterised in that the base of the endless core (2) is produced as an elastomeric compound and that the coating with a low coefficient or friction (9) is made of polyethylene with a very high molecular weight.

8. A transmission element according to any of claims 2, 3, 5 or 7, characterised in that the reinforcement (7) of the endless core (2) consists of alternate S-twist and Z-twist metal cables.

9. A transmission element according to any of claims 2, 3, 5 or 7, characterised in that the reinforcement (7) of the endless core consists of alternate S-twist and Z-twist textile twists.

10. A transmission element according to claim 1, characterised in that the device for guiding the transverse links (3) in relation to each other consists, on the barbs (12a) and (12b) of each of the faces (F1) and (F2), of a centring pin (13) and a recess (14), the barb (12a) bearing the centring pin (13) on the face (F1) and the recess (14) on the face (F2) and, reciprocally, the barb (12b) bearing the recess (14) on the face (F1) and the centring pin (13) on the face (F2).

11. A transmission element according to claim 1, characterised in that the device for guiding the transverse links (3) in relation to each other consists, on each of the faces (F1) and (F2), of an assembly of positioning lugs (19) and recesses (20), arranged on the bases (10) of the transverse links (3).

12. A transmission element according to claim 1, characterised in that the device for guiding the transverse links in relation to each other consists of both the assembly of centring pin (13) and recess (14) located on the barbs (12a) and (12b) and by the assembly of positioning lugs (19) and recesses (20) located on the bases (10) of the transverse links (3).

13. A transmission element according to any of claims 1 or 10 to 12, characterised in that the bottom (15) of the throat (4) of the transverse link (3) comprises a coating with a low coefficient of friction.

14. A transmission element according to any of claims 1 or 10 to 12, characterised in that the bottom (15) of the throat (4) of the transverse link (3) comprises a coating with abrasion-resistance properties.

15. A transmission element according to any of claims 1 or 10 to 14, characterised in that the transverse links (3) are made of a compound with a thermoplastic polymeric matrix and reinforced with fibres the length of which equals thirty millimetres at most.

16. A transmission element according to any of claims 1 or 10 to 14, characterised in that the transverse links (3) are made of a compound with a duroplastic polymeric matrix and reinforced with fibres the length of which equals thirty millimetres at most.

17. A transmission element according to any of claims 1 or 10 to 16, characterised in that the reinforcement of the compound constituting the transverse links (3) is an aromatic polyamide, used in a proportion of ten to sixty per cent by weight of the polymeric matrix.

18. A transmission element according to any of claims 1 or 10 to 16, characterised in that the reinforcement of the compound constituting the transverse links (3) is made of glass fibre, used in a proportion of ten to sixty per cent of the weight of the polymeric matrix.

19. A transmission element according to any of claims 1 or 10 to 16, characterised in that the reinforcement of the compound constituting the transverse links (3) is made of carbon fibre, used in a proportion of ten to sixty per cent by weight of the polymeric matrix.

20. A transmission element according to any of claims 1 or 10 to 16, characterized in that the reinforcement of the compound constituting the transverse links (3) is made of short boron fibre, used in a proportion of ten to sixty per cent by weight of the polymeric matrix.

21. A transmission element according to any of claims 2 to 6, characterised in that the endless core (2) is produced by moulding a compound known as "Reinforced Thermoplastic Fibre".

22. A transmission element according to any of claims 10 to 21, characterised in that the device for guiding the transverse links (3) in relation to each other is arranged such that, after assembly, the pitch line (M) of the said transverse links (3) coincides with the neutral axis (N) of the endless core (2).

## Patentansprüche

1. Kraftübertragungsorgan (1) mit Schub-Quergliedern (3) für ein stufenloses Getriebe, das durch trockene Reibung funktioniert und zusammengesetzt ist aus mindestens einer endlosen, nichtmetallischen, biegsamen, in Längsrichtung quasi undehnbaren Seele, und aus ebenfalls nichtmetallischen Quergliedern (3), die jeweils mindestens eine Kehlung (4) aufweisen, in die die endlose Seele (2) eingebettet ist, mit einem Reibungskoeffizienten zwischen der endlosen Seele (2) und den Quergliedern (3) von höchstens 0,4, dadurch gekennzeichnet, daß die axial genau symmetrischen Querglieder (3) auf jeder ihrer Stirnflächen (F1) und (F2) eine ein Ausrichten der Querstege (3) auf der endlosen Seele (2) entsprechend dem Anbringungssinn unnötig machende Einrichtung zur wechselseitigen Führung der Querglieder (3) aufweisen, die von einem mit einer Ausnehmung (14, 20) zusammenwirkenden erhabenen Element, einer Zentriererhebung (13) oder einer Positionierungsnase (19) gebildet ist.

2. Kraftübertragungsorgan nach Anspruch 1, dadurch gekennzeichnet, daß die endlose Seele (2) gebildet ist aus einem flachen Riemen mit offenen Flanken, der eine Verstärkung in Längsrichtung aufweist, die aus textilen Fäden oder Zwirnen oder aus metallischen Fäden oder Drähten zusammengesetzt ist, wobei mindestens die in Kontakt mit den Quergliedern (3) stehende Fläche der endlosen Seele (2) mit einem Material mit niedrigem Reibungskoeffizienten (9) beschichtet ist.

3. Kraftübertragungsorgan nach Anspruch 1, dadurch gekennzeichnet, daß die endlose Seele (2) gebildet ist aus einem Riemen mit hexagonalem Querschnitt, der eine Verstärkung in Längsrichtung aufweist, die aus textilen Zwirnen oder Fäden oder aus metallischen Fäden oder Drähten zusammengesetzt ist, wobei mindestens die in Kontakt mit den Quergliedern (3) stehende Fläche der endlosen Seele (2) mit einem Material mit niedrigem Reibungskoeffizienten (9) beschichtet ist.

4. Kraftübertragungsorgan nach Anspruch 1, dadurch gekennzeichnet, daß es zwei endlose Seelen (2) aufweist mit etwa rundem Querschnitt, die oberflächlich mit einem Material mit niedrigem Reibungskoeffizienten (9) beschichtet sind.

5. Kraftübertragungsorgan nach einem der Ansprüche 2 bis 4, dadurch gekennzeichnet, daß die Beschichtung mit niedrigem Reibungskoeffizienten (9) der endlosen Seele (2) ein Film aus Polytetrafluorethylen ist, der mit der die Basis der endlosen Seele (2) bildenden polymeren Zusammensetzung eng verbunden ist.

6. Kraftübertragungsorgan nach einem der Ansprüche 2 bis 4, dadurch gekennzeichnet, daß die Beschichtung mit niedrigem Reibungskoeffizienten (9) der endlosen Seele (2) ein ölhaltiger Lack ist.

7. Kraftübertragungsorgan nach einem der Ansprüche 2 bis 4, dadurch gekennzeichnet, daß die Basis der endlosen Seele (2) durch eine elastomere Zusammensetzung realisiert ist und daß die Beschichtung mit niedrigem Reibungskoeffizienten (9) aus Polyethylen mit sehr hohem Molekulargewicht besteht.

8. Kraftübertragungsorgan nach einem der Ansprüche 2, 3, 5 oder 7, dadurch gekennzeichnet, daß die Verstärkung (7) der endlosen Seele (2) aus abwechselnd S- und Z-förmig verdrillten metallischen Drähten gebildet ist.

9. Kraftübertragungsorgan nach einem der Ansprüche 2, 3, 5 oder 7, dadurch gekennzeichnet, daß die Verstärkung (7) der endlosen Seele (2) aus abwechselnd S- und Z-förmig verdrillten textilen Zwirnen gebildet ist.

10. Kraftübertragungsorgan nach Anspruch 1, dadurch gekennzeichnet, daß die Einrichtung zur wechselseitigen Führung der Querglieder (3) auf den Haken (12a) und (126) jeder der Stirnflächen (F1) und (F2) aus einer Zentriererhebung (13) und einer Ausnehmung (14) gebildet ist, wobei der Haken (12a) die Zentriererhebung (13) auf der Stirnfläche (F1) und die Ausnehmung (14) auf der Stirnfläche (F2) trägt und andererseits der Haken (12b) die Ausnehmung (14) auf der Stirnfläche (F1) und die Zentriererhebung (13) auf der Stirnfläche (F2) trägt.

11. Kraftübertragungsorgan nach Anspruch 1, dadurch gekennzeichnet, daß die Einrichtung zur wechselseitigen Führung der Querglieder (3) auf jeder der Stirnflächen (F1) und (F2) aus einem Satz von Positionierungsnasen (19) und Ausnehmungen (20), die an der Basis (10) der Querglieder (3) angeordnet sind, gebildet ist.

12. Kraftübertragungsorgan nach Anspruch 1, dadurch gekennzeichnet, daß die Einrichtung zur wechselseitigen Führung der Querglieder (3) aus einerseits dem an den Haken (12a) und (12b) angeordneten Satz von Zentriererhebung (13) und Ausnehmung (14) und aus andererseits dem an der Basis der Querglieder (3) angeordneten Satz von Positionierungsnase (19) und Ausnehmung (20) gebildet ist.

13. Kraftübertragungsorgan nach einem der Ansprüche 1 oder 10 bis 12, dadurch gekennzeichnet, daß der Grund (15) der Kehlung (4) des Querglieds (3) eine Beschichtung mit niedrigem Reibungskoeffizienten aufweist.

14. Kraftübertragungsorgan nach einem der Ansprüche 1 oder 10 bis 12, dadurch gekennzeichnet, daß der Grund (15) der Kehlung (4) des Querglieds (3) eine Beschichtung mit Abriebfestigkeitseigenschaften aufweist.

15. Kraftübertragungsorgan nach einem der Ansprüche 1 oder 10 bis 14, dadurch gekennzeichnet, daß die Querglieder (3) aus einer eine polymere, thermoplastische Matrix und eine Verstärkung durch Fasern mit einer Länge von höchstens 30 mm aufweisenden Zusammensetzung hergestellt sind.

16. Kraftübertragungsorgan nach einem der Ansprüche 1 oder 10 bis 14, dadurch gekennzeichnet, daß die Querglieder (3) aus einer eine polymere wärmehärtbare Matrix und eine Verstärkung durch Fasern mit einer Länge von höchstens 30 mm aufweisenden Zusammensetzung hergestellt sind.

17. Kraftübertragungsorgan nach einem der Ansprüche 1 oder 10 bis 16, dadurch gekennzeichnet, daß die Verstärkung der die Querglieder (3) bildenden Zusammensetzung ein im Verhältnis von 10 bis 60 % des Gewichts der polymeren Matrix eingesetztes aromatisches Polyamid ist.

18. Kraftübertragungsorgan nach einem der Ansprüche 1 oder 10 bis 16, dadurch gekennzeichnet, daß die Verstärkung der die Querglieder (3) bildenden Zusammensetzung aus im Verhältnis von 10 bis 60 % des Gewichts der polymeren Matrix eingesetzten Glasfasern besteht.

19. Kraftübertragungsorgan nach einem der Ansprüche 1 oder 10 bis 16, dadurch gekennzeichnet, daß die Verstärkung der die Querglieder (3) bildenden Zusammensetzung aus im Verhältnis von 10 bis 60 % des Gewichts der polymeren Matrix eingesetzten Karbonfasern besteht.

20. Kraftübertragungsorgan nach einem der Ansprüche 1 oder 10 bis 16, dadurch gekennzeichnet, daß die Verstärkung der die Querglieder (3) bildenden Zusammensetzung aus im Verhältnis von 10 bis 60 % des Gewichts der polymeren Matrix eingesetzten kurzen Borfasern besteht.

21. Kraftübertragungsorgan nach einem der Ansprüche 2 bis 6, dadurch gekennzeichnet, daß die endlose Seele (2) durch Formen einer Zusammensetzung namens "Fibre Renforcée Thermoplastique" (verstärkte thermoplastische Faser) gebildet ist.

22. Kraftübertragungsorgan nach einem der Ansprüche 10 bis 21, dadurch gekennzeichnet, daß die Einrichtung zur wechselseitigen Führung der Querglieder (3) derart angeordnet ist, daß nach der Montage die Wälzlinie (M) (ligne primitive) der Querglieder (3) mit der neutralen Faser (N) der endlosen Seele (2) zusammenfällt.
